# EUROPEAN PATENT APPLICATION

(11) **EP 1 398 140 A1**
(43) Date of publication of application: **17.03.2004**
(21) Application number: 02256357.1
(22) Date of filing: 13.09.2002
(51) Int. Cl.: B29D 31/508, B29D 31/515, A43B 9/18

(54) **Method for forming an outsole with an insert on an article of footwear**

(71) Applicant: Chi, Cheng-Hsian, Taichung City (TW)
(72) Inventor: Chi, Cheng-Hsian, Taichung City (TW)
(74) Representative: Alexander, Thomas Bruce

(57) **Abstract**

A method for forming an outsole (60) of an article of footwear includes the steps of placing an upper (10) and an insert (20) in a mold cavity (50) , filling the mold cavity (50) and a gap (70) between the upper (10) and the insert (20) with a foamable material, and closing the mold cavity (50) and subjecting the foamable material to expansion and molding so as to form the outsole (60) with the insert (20) inlaid therein.

## Description

This invention relates to a method for forming an outsole with an insert on an article of footwear.

Fig. 1 illustrates an article of conventional footwear that is disclosed in U.S. Patent No. 5,890,248. The article of conventional footwear is made according to a method that involves the step of filling a foamable material into a cavity confined by an upper 3 and an outsole 2 of the article of conventional footwear to form a midsole 4 between the upper 3 and the outsole 2. However, the appearance of the outsole 2 of the article of conventional footwear is monotonous and unattractive.

Therefore, the object of the present invention is to provide a method for forming an outsole of an article of footwear that is capable of overcoming the aforementioned drawback of the prior art.

According to the present invention, there is provided a method for forming an outsole of an article of footwear. The method comprises the steps of: (a) preparing an upper with an insole and a peripheral wall; (b) preparing an insert that has a top wall, left and right side walls, and front and rear side walls extending between the left and right side walls; (c) forming a releasing film on at least one of the left and right side walls and the rear side wall of the insert; (d) preparing a mold that has an upper mold part with a last, a lower mold part, and a pair of side mold parts; (e) placing the upper and the insert in a mold cavity confined by an assembly of the last and the side mold parts in such a manner that the upper is mounted on the last, that the releasing film is in contact with at least one of the side mold parts, and that the insert is vertically spaced apart from the insole of the upper by a gap; (f) filling the mold cavity and the gap with a foamable material in such a manner that the foamable material surrounds the insole of the upper, and the front side wall and the top wall of the insert; (g) closing the mold cavity using the lower mold part, and subjecting the foamable material to expansion, cross-linking, and molding so as to form the outsole with the insert inlaid therein; and (h) removing the releasing film from the insert to expose said at least one of the left and right side walls and the rear side wall of the insert from the outsole.

In the drawings which illustrate an embodiment of the invention,

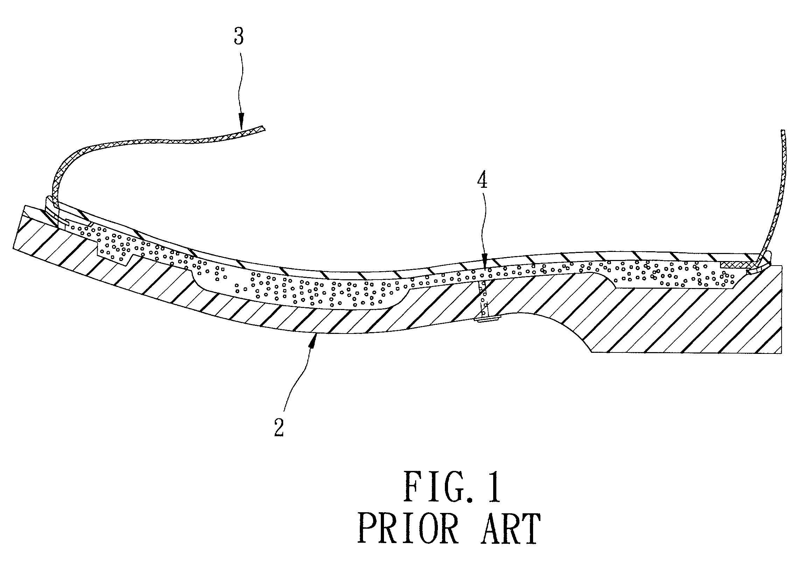

Fig. 1 is a fragmentary sectional view of an article of conventional footwear;
Fig. 2 is a block diagram illustrating consecutive steps of a preferred embodiment of a method of this invention for forming an outsole of an article of footwear;
Fig. 3 is an exploded perspective view to illustrate how the outsole of the article of footwear is formed according to the method of this invention;
Fig. 4 is a schematic sectional view to illustrate how the outsole of the article of footwear is formed according to the method of this invention;
Fig. 5 is a rear sectional view to illustrate how the outsole of the article of footwear is formed according to the method of this invention; and
Fig. 6 is a perspective view of the article of footwear formed according to the method of this invention.

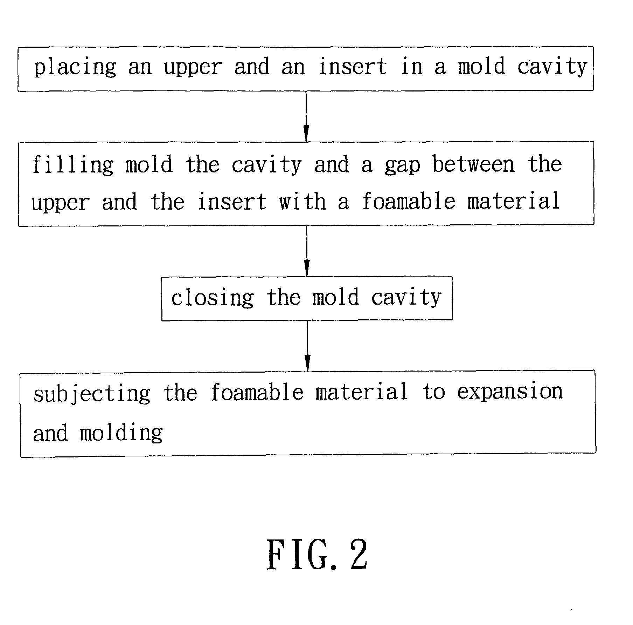

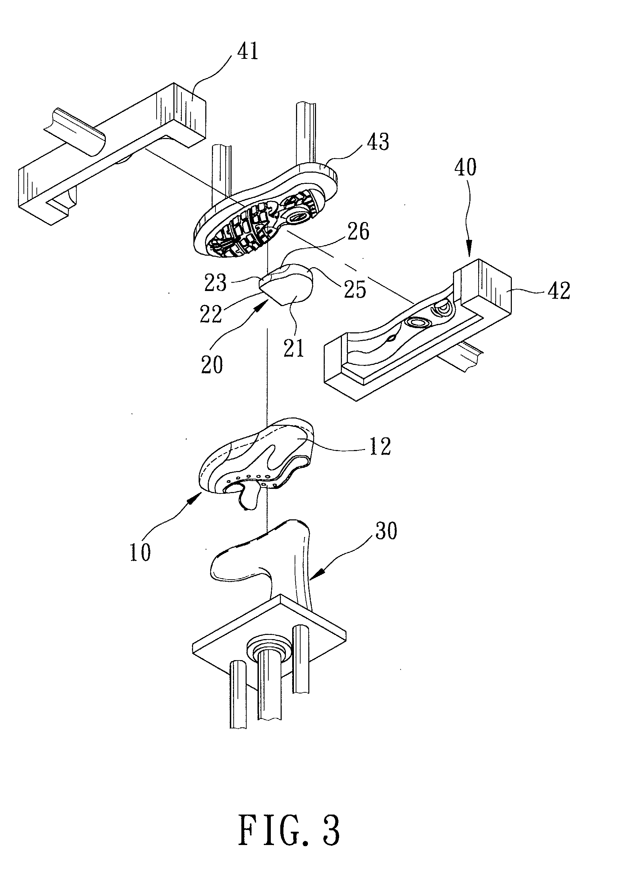

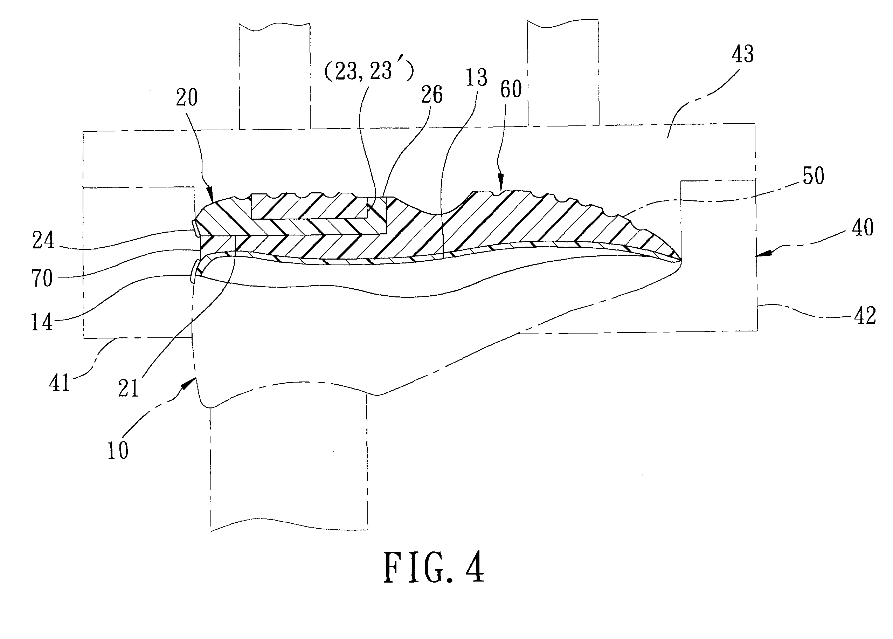

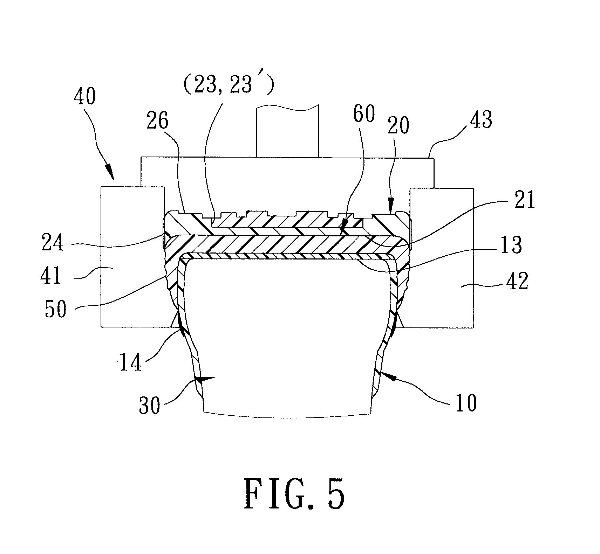

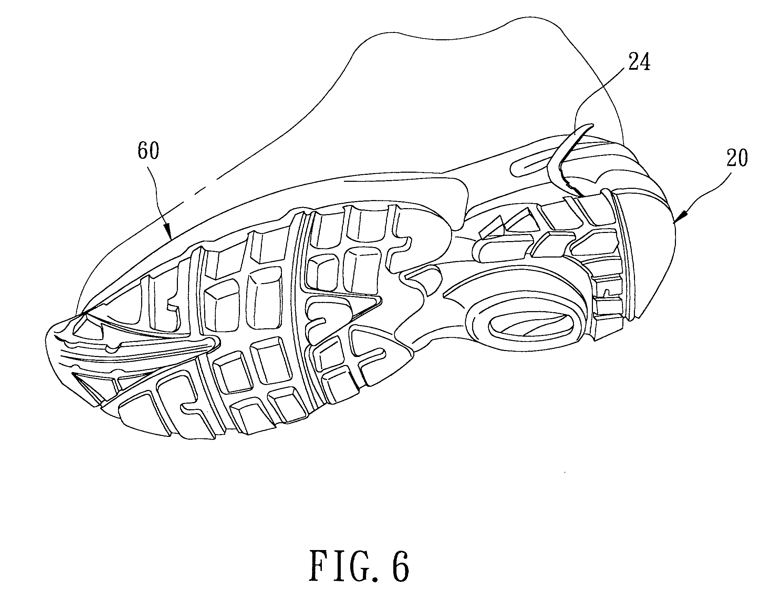

Figs. 2 to 6 illustrate a preferred embodiment of a method of this invention for forming an outsole 60 of an article of footwear. The method includes the steps of: (a) preparing an upper 10 with an insole 13 and a peripheral wall 12; (b) preparing an elastic insert 20 that has a top wall 21, left and right side walls 23, and front and rear side walls 22, 25 extending between the left and right side walls 23; (c) forming a first releasing film 24 on the left and right side walls 23 and the rear side wall 25 of the insert 20, and a second releasing film 14 on the peripheral wall 12 of the upper 10, the first releasing film 24 being made from a silicon oil, the second releasing film 14 being an adhesive tape; (d) preparing a mold 40 that has an upper mold part with a last 30, a lower mold part 43, and a pair of side mold parts 41, 42; (e) placing the upper 10 and the insert 20 in a mold cavity 50 confined by an assembly of the last 30 and the side mold parts 41, 42 in such a manner that the upper 10 is mounted on the last 30, that the first and second releasing films 24, 14 are in contact with the side mold parts 41, 42, and that the insert 20 is vertically spaced apart from the insole 13 of the upper 10 by a gap 70 and is held by the side mold parts 41, 42; (f) filling the mold cavity 50 and the gap 70 with a foamable material, such as a polyurethane foamable material, in such a manner that the foamable material surrounds the insole 13 of the upper 10 and the front side wall 22 and the top wall 21 of the insert 20; (g) closing the mold cavity 50 using the lower mold part 43, and subjecting the foamable material to expansion, cross-linking, and molding so as to form the outsole 60 with the insert 20 inlaid therein; and (h) removing the first and second releasing films 24, 14 from the insert 20 and the upper 10 so as to remove resultant flash therefrom and so as to expose the left and right side walls 23 and the rear side wall 25 of the insert 20 from the outsole 60. The filling of the foamable material in a mold cavity is advantageous in that the amount of the foamable material to be filled in the mold cavity can be better controlled so as to prevent insufficient or overfilling of the foamable material in the mold cavity.

Preferably, the foamable material that fills the mold cavity 50 in step (f) is subjected to partial expansion and cross-linking.

The insert 20 has a bottom wall 26 opposite to the top wall 21 and formed with a recess 23 that is filled with the foamable material in step (f) so as to permit the insert 20 to be inlaid in the outsole 60.

Since the insert 20 and the outsole 60 can be different in color, shape, and property, such as elasticity and hardness, the appearance of the outsole 60 is enhanced, thereby eliminating the aforesaid drawback associated with the prior art.

## Claims

1. A method for forming an outsole (60) of an article of footwear, **characterized in that** the steps of:
(a) preparing an upper (10) with an insole (13) and a peripheral wall (12);
(b) preparing an insert (20) that has a top wall (21) , left and right side walls (23) , and front and rear side walls (22, 25) extending between the left and right side walls (23);
(c) forming a releasing film (24) on at least one of the left and right side (23) and the rear side wall (25) of the insert (20);
(d) preparing a mold (40) that has an upper mold part with a last (30), a lower mold part (43), and a pair of side mold parts (41, 42);
(e) placing the upper (10) and the insert (20) in a mold cavity (50) confined by an assembly of the last (30) and the side mold parts (41, 42) in such a manner that the upper (10) is mounted on the last (30) , that the releasing film (24) is in contact with at least one of the side mold parts (41, 42) , and that the insert (20) is vertically spaced apart from the insole (13) of the upper (10) by a gap (70);
(f) filling the mold cavity (50) and the gap (70) with a foamable material in such a manner that the foamable material surrounds the insole (13) of the upper (10) , and the front side wall (22) and the top wall (21) of the insert (20);
(g) closing the mold cavity (50) using the lower mold part (43) , and subjecting the foamable material to expansion, cross-linking, and molding so as to form the outsole (60) with the insert (20) inlaid therein; and
(h) removing the releasing film (24) from the insert (20) to expose said at least one of the left and right side walls (23) and the rear side wall (25) of the insert (20) from the outsole (60).

2. The method of Claim 1, **characterized in that** the foamable material that fills the mold cavity (50) in step (f) is subjected to partial expansion and cross-linking.

3. The method of Claim 1, **characterized in that** the insert (20) further has a bottom wall (26) opposite to the top wall (21) and formed with a recess (23) that is filled with the foamable material in step (f) .
